(19) Europäisches Patentamt

European Patent Office

Office européen des brevets

(11) **EP 1 165 683 B1**

(12) **EUROPÄISCHE PATENTSCHRIFT**

(45) Veröffentlichungstag und Bekanntmachung des Hinweises auf die Patenterteilung:
**29.09.2004 Patentblatt 2004/40**

(21) Anmeldenummer: **00912513.9**

(22) Anmeldetag: **26.02.2000**

(51) Int Cl.$^7$: **C08K 9/06**

(86) Internationale Anmeldenummer:
**PCT/EP2000/001616**

(87) Internationale Veröffentlichungsnummer:
**WO 2000/058396 (05.10.2000 Gazette 2000/40)**

(54) **VERFAHREN ZUR REDUZIERUNG DES STAUBVERHALTENS VON SILIKATEN**

METHOD OF REDUCING THE DUST GENERATION OF SILICATES

PROCEDE PERMETTANT DE REDUIRE LA PROPENSION DES SILICATES A PRODUIRE DE LA POUSSIERE

(84) Benannte Vertragsstaaten:
**AT BE CH CY DE DK ES FI FR GB GR IE IT LI LU MC NL PT SE**

(30) Priorität: **26.03.1999 DE 19913810**

(43) Veröffentlichungstag der Anmeldung:
**02.01.2002 Patentblatt 2002/01**

(73) Patentinhaber: **Quarzwerke GmbH**
**50226 Frechen (DE)**

(72) Erfinder:
 • **FENTEN, Norbert**
  **D-50189 Elsdorf (DE)**
 • **WOLF, Wilfried**
  **D-50354 Hürth (DE)**

(74) Vertreter:
**Sternagel, Fleischer, Godemeyer & Partner**
**Patentanwälte**
**An den Gärten 7**
**51491 Overath (DE)**

(56) Entgegenhaltungen:
**EP-A- 0 591 676      EP-A- 0 843 029**
**EP-A- 0 913 431      DE-A- 3 439 745**
**GB-A- 2 284 214      US-A- 4 184 880**

 • **CHEMICAL ABSTRACTS, vol. 129, no. 7, 17. August 1998 (1998-08-17) Columbus, Ohio, US; abstract no. 82241, METCALFE, E.: "Silicon-based flame retardants" XP002142088 & RECENT ADV. FLAME RETARD. POLYM. MATER., Bd. 8, 1997, Seiten 129-135,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Gegenstand der Erfindung ist ein Verfahren zur Reduzierung des Staubverhaltens von Silikaten. Ein weiterer Gegenstand der Erfindung ist ein Silikat mit reduziertem Staubverhalten.

Silikate, insbesondere nadelförmige Silikate wie beispielsweise Wollastonit, ein Kettensilikat, werden als verstärkende Füllstoffe für Kunststoffanwendungen eingesetzt.

Bei Wollastonit handelt es sich um ein natürliches Calciumsilikat der Formel $Ca_3[Si_3O_9]$. Monokliner Wollastonit besteht aus $SiO_4$-Tetraedern, die in Anordnung von Dreierketten der Formel $[Si_3O_9]^{6-}$ verbunden sind: Dabei sind die einzelnen Ketten durch $Ca^{2+}$-Ionen miteinander verbunden. Dies erklärt, weshalb die Partikel des Wollastonits eine nadelförmige Struktur aufweisen können.

Wollastonit besitzt weiterhin vorteilhafte Stoffeigenschaften. Hierzu gehört beispielsweise das Fehlen von chemisch gebundenem Wasser, welches in anderen wasserenthaltenen Silikaten dazu führt, daß sich die Struktur beim Erhitzen durch Wasserverlust verändert. Dies würde im Falle der Einarbeitung in Kunststoffe dazu führen, daß ein verstärkender Effekt nicht mehr erzielt würde. Weitere Vorteile sind der geringe Schrumpfungsgrad beim Trocknen und beim Erhitzen, ein sehr geringer Expansionskoeffizient und gute mechanische Eigenschaften der hergestellten Kunststoffprodukte, die Wollastonit enthalten. Neben der Anwendung als Additiv für Kunststoffe wird Wollastonit auch verwendet zur Herstellung von keramischen Produkten, Sanitärartikein und Porzellan.

Die vorliegende Erfindung betrifft vorwiegend den Einsatz des Wollastonites in Kunststoffen.

Dabei wird der Wollastonit als Füllstoff hergestellt durch Mahlung des gewonnenen Wollastonites mit nachfolgender Windsichtung. Man erhält dann nadelförmige Wollastonitteilchen, die entweder direkt in die Kunststoffmischung eingearbeitet werden oder in Form von polymeren Vormischungen mit Anteilen von 10 bis 40 Gew. % Wollastonit in die Kunststoffe eingearbeitet werden. Aufgrund der nadelförmigen Struktur des Wollastonites erzielt man eine erhebliche Verbesserung der mechanischen Eigenschaften im Kunststoff und bei den daraus hergestellten Kunststofformteilen.

Zusätzlich wird gemäß dem Stand der Technik der Wollastonit häufig mit Silanverbindungen beschichtet, um eine bessere Einbindung in das Kunststoffmaterial zu erzielen. Dabei werden beispielsweise Oberflächenbeschichtungen mit Aminosilan, Epoxysilan, Methacryisilan, Trimethylsilan, Vinylsilan oder Alkylsilan vorgenommen.

Diese Silikatmaterialien des Standes der Technik besitzen jedoch den Nachteil, daß sie aufgrund der durch die Silanbeschichtung erhöhten Dispersität eine verstärkte Staubbildung aufweisen. Die Staubanteile sind feinstteilige Silikatteilchen, die im wesentlichen keine nadelförmige Struktur mehr aufweisen und daher im Kunststoff keinerlei Verstärkungseffekte bewirken können. Dies bedeutet, daß ein Teil des eingesetzten Silikatfüllstoffes nicht wirksam ist und lediglich als nicht verstärkender pulverförmiger Füllstoff wirkt.

Man hat versucht, diesen Nachteil zunächst dadurch zu beheben, daß man den Wollastonit verschiedenen Verfahren unterzogen hat, um das Staubverhalten zu mindern. Derartige Verfahren sind jedoch relativ kostenaufwendig und teuer und führen daher zu einer erheblichen Verteuerung dieses Rohstoffes, so daß er aus Kostengründen als verstärkender Füllstoff für Kunststoffe uninteressant wird. Damit ist dieser Rohstoff zu anderen Rohstoffen, wie Glasfasern oder anderen Fasermaterialien, die ebenfalls als verstärkende Füllstoffe eingesetzt werden, nicht mehr konkurrenzfähig.

Die technische Aufgabe der Erfindung war es daher, ein einfaches Verfahren zur Reduzierung des Staubverhaltens von Silikaten, insbesondere von Wollastonit zur Verfügung zu stellen, das möglichst kostengünstig durchführbar ist und zu einer erheblichen Verringerung des Staubverhaltens des Wollastonites. führt.

Dieses technische Aufgabe wird dadurch gelöst, daß man das zerkleinerte Silikat, insbesondere den Wollastonit, mit einem Polysiloxan-Polyether-Copolymer oberflächenbeschichtet.

Es wurde nämlich gefunden, daß im Gegensatz zu bisherigen Oberflächenbeschichtungen aus Silanen die Beschichtung mit Polysiloxan-Polyether-Copolymer zu einer erheblichen Verminderung des Staubverhaltens von weit über 50 % gegenüber den Materialien des Standes des Technik führt. Die Oberflächenbeschichtung der Silikate ist ein einfacher kostengünstiger Prozeß. So werden die entsprechenden Oberflächenbeschichtungsmittel üblicherweise durch Mischen des Materials in einem Fluidmischer oberflächlich aufgebracht. Weiterhin ist diese Technik bei der Beschichtung mit entsprechenden Silanverbindungen bereits erprobt. Durch diese einfache Methode, das Staubverhalten der Silikate zu vermindern, sind die bisherigen mehrstufigen physikalischen Verfahren zur Verminderung des Staubverhaltens nicht mehr notwendig und können auf einfache Weise ersetzt werden.

Dabei war es besonders erstaunlich, daß eine Reduzierung des Staubverhaltens bei der Oberflächenbeschichtung mit entsprechenden Silanverbindungen nicht oder nur in geringem Maße eintritt, während die Beschichtung mit Polysiloxan-Polyether-Copolymer zu signifikanten Verminderungen des Staubverhaltens führt. Hierzu wurden entsprechende Vergleichsversuche durchgeführt, die im experimentellen Teil der Anmeldung weiter beschrieben werden.

In einer besonders bevorzugten Ausführungsform wird für die Oberflächenbeschichtung ein Polysiloxan-Polyether-Copolymer in einer Menge von 0,1 bis 4 Gew.-%, besonders bevorzugt 0,5 bis 1,5 Gew.-% eingesetzt.

Wie bereits weiter oben erwähnt wurde, läßt sich mit Polysiloxan-Polyether-Copolymer das Staubverhalten von Silikaten, insbesondere Calciummetasilikaten und ganz besonders bevorzugt Wollastoniten reduzieren.

Überraschenderweise stellte sich hierbei heraus, daß durch die staubreduzierende Oberflächenbeschichtung eine gute Einbindung des Füllstoffes in das Kunststoffmaterial erzielt wurde. Durch Verwendung der erfindungsgemäßen Polysiloxan-Polyether-Copolymer-Verbindungen wird hier derselbe Effekt erreicht wie mit entsprechenden funktionellen Silanverbindungen, die aus dem Stand der Technik bekannt sind.

Ein weiterer Gegenstand der Erfindung ist ein Silikat mit reduziertem Staubverhalten, das mit einem Polysiloxan-Polyether-Copolymer oberflächenbeschichtet ist, einen Staubanteil nach Heubach von 500 bis 1200 mg/100 g besitzt und wobei das Silikat eine spezifische Oberfläche gemessen nach DIN 66132-BET von 0,5 bis 1,5 $m^2$/g hat.

In bevorzugter Weise handelt es sich bei dem Silikat um ein Calciummetasilikat, besonders bevorzugt um einen Wollastonit. Das Silikat ist bevorzugt mit 0,1 bis 4 Gew.-%, besonders bevorzugt 0,5 bis 1,5 Gew.-% Polysiloxan-Polyether-Copolymer obertlächenbeschichtet. Das Silikat wird als verstärkender Füllstoff in Kunststoffen, insbesondere Polyurethan, Polyamid und Polypropylen, eingesetzt. Die Herstellung des Silikates erfolgt durch Mahlen des Wollastonits auf einer entsprechenden Zerkleinerungsanlage wie beispielsweise einer Gegenstrahlprallmahlanlage. Das zerkleinerte Fertigprodukt wird dann aus der Zerkleinerungsanlage entnommen und in einem Fluidmischer mit dem Polysiloxan-Polyether-Copolymer oberflächenbeschichtet. Diese Beschichtung erfolgt bei Temperaturen zwischen 40 und 100 °C infolge Reibungswärme. Nach dem Beschichten wird das Material auf Raumtemperatur gekühlt. Man erhält als Endprodukt einen staubarmen beschichteten Wollastonit mit den oben angegebenen Eigenschaften. '

In den nachfolgenden Figuren wird das erfindungsgemäße Produkt näher gekennzeichnet.

Fig 1     zeigt ein FTIR-Spektrum des erhaltenen Produktes als Pressling. Die Figur zeigt die Transmissionen in % in Abhängigkeit von der Wellenzahl in cm$^{-1}$.

Fig. 2     zeigt ein weiteres FTIR-Spektrum des erhaltenen Produktes. Die Auswertung erfolgt als Darstellung der Absorption in Abhängigkeit von der Wellenzahl in cm$^{-1}$. Der Rohstoff Wollastonit wurde aus dem FTIR-Spektrum mathematisch subtrahiert.

Fig. 3     zeigt den Gewichtsanteil des erfindungsgemäßen Produktes in Abhängigkeit von der Nadellänge. Dabei ist die Nadellänge in Nadellängenklassen in μm angegeben.

Fig. 4     zeigt den Gewichtsanteil des erfindungsgemäßen Produktes in Abhängigkeit des Nadeldurchmessers. Der Nadeldurchmesser wird in Nadeldurchmesserklassen in μm angegeben.

Fig. 5     zeigt schließlich das mittlere Länge-Durchmesser-Verhältnis des erfindungsgemäßen Produktes in Abhängigkeit von der Nadellänge. Die Nadellänge ist in Nadellängenklassen in μm angegeben.

Dieses Material wird bevorzugt als verstärkender Füllstoff in Kunststoffen eingesetzt und führt hier zu einer Verbesserung der mechanischen Eigenschaften, insbesondere der Zugfestigkeit und der Versteifung des Verbundstoffes. Besonders bevorzugt erfolgt der Einsatz als verstärkender Füllstoff in Kunststoffen ausgewählt aus der Gruppe Polyurethan, Polyamid, Polypropylen. Weitere Vorteile liegen in einer hohen Durchsatzleistung am Extruder aufgrund guter Dispergierbarkeit und hoher Wärmeleitfähigkeit des Materials, geringerer Schwindung und höherer Maßhaltigkeit der Wollastonit-haltigen polymeren Vormischung durch Verkleinerung des linearen Ausdehnungsqueffizienten. Die mit dem Material als verstärkendem Füllstoff hergestellten Kunststoffteile besitzen eine exzellente Oberflächenqualität aufgrund der feinteiligen Nadelstruktur des Materials. Weiterhin wird die Wärmeformbeständigkeit verbessert und die Kriechneigung verringert. Durch den Einsatz der verstärkenden Füllstoffe wird auch eine Erhöhung der Oberflächenhärte der Vormischung, bedingt durch die Härte des Füllstoffes erzielt, mit einer optimalen Einbindung des Materials in den Kunststoff.

Die nachfolgenden Beispiele sollen die Erfindung näher erläutern.

**BEISPIELE**

**Beispiel 1**

**Herstellung des mit Polysiloxan-Polyether-Copolymer beschichteten Wollastonits**

1000 kg Wollastonit werden auf einer Gegenstrahlprallmahlanlage (Majac) zerkleinert. Die Strahlmühle arbeitet mit 2 Borcarbiddüsen und einem Arbeitsdruck von 7 bar. Der Sichter zum Abscheiden nicht zerkleinerter Grobpartikel wird mit einer Drehzahl in Höhe von 1800 U/min betrieben. Die Abscheidung des Fertigproduktes erfolgt im Filter.

75 kg des so zerkleinerten Wollastonits werden in einem Thyssen-Henschel-Fluidmischer FM250D mit 750 g eines Polysiloxan-Polyether-Copolymers (TEGOSTAB B 8427, TH. GOLDSCHMIDT AG, Essen) beschichtet.

Die Drehzahl der Mischwerkzeuge (Bodenräumer, Fluidisierflügel. Homwerkzeuge) beträgt 1200 U/min. Der Fluidmischer ist doppelwandig und ermöglicht das Einstellen bestimmter Temperaturprofile unabhängig von der Reibungswärme durch indirekte Beheizung mit heißem Wasser bzw. Wasserdampf. Das im Wollastonit eingestellte Temperaturprofil erreicht 80 °C.

Anschließend wird der beschichtete Wollastonit mit einer Materialtemperatur von 80 °C in einem doppelwandigem Kühlmischer (Thyssen-Henschel Typ 650) auf Raumtemperatur gekühlt. Die Mischwerkzeuge sind vergleichbar den Mischwerkzeugen des Fluidmischers. Die Drehzahl beträgt 140 U/min.

Man erhält als Endprodukt einen staubarmen, beschichteten Wollastonit.

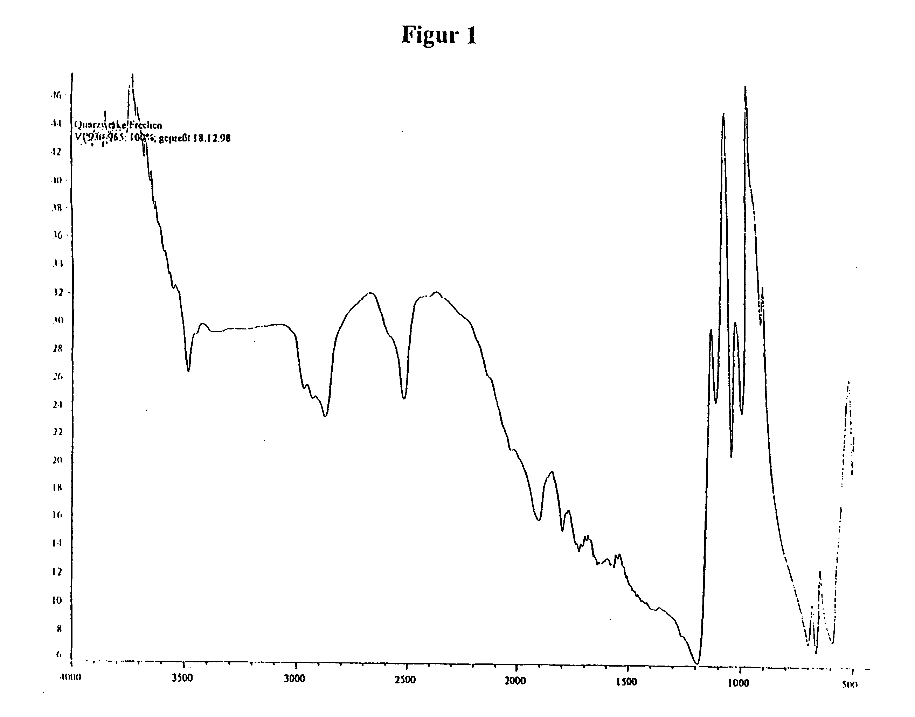

Figur 1 zeigt ein FTIR-Spektrum des erhaltenen Produktes als Preßling. Die Figur zeigt die Transmissionen in % in Abhängigkeit von der Wellenzahl in cm$^{-1}$. Die Schwingungsbanden sind charakteristisch für das System Wollastonit beschichtet mit Polyosiloxan- Polyether- Copolymer.

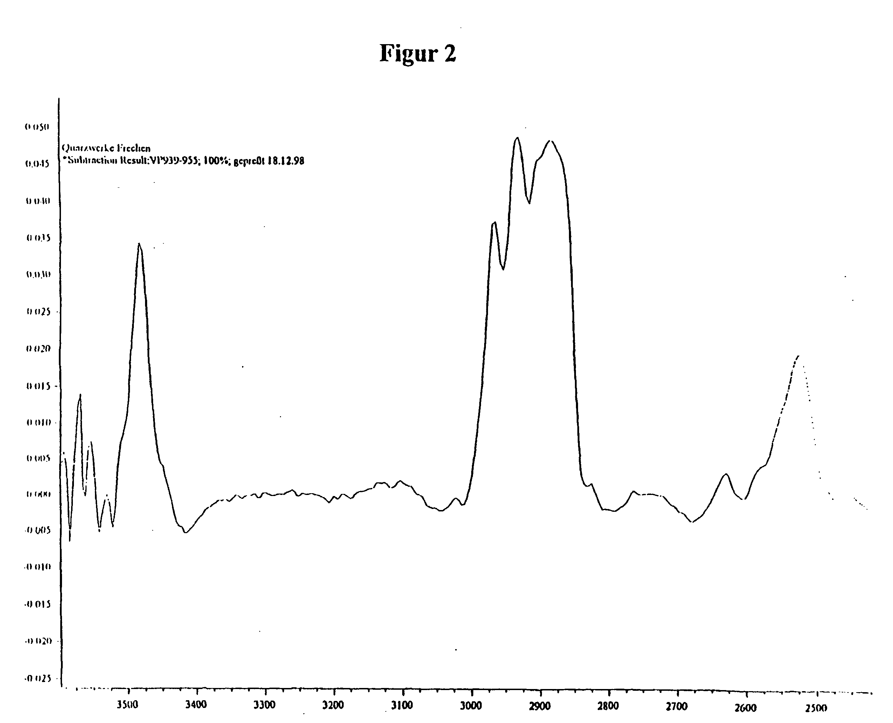

Die Figur 2 zeigt ein weiteres FTIR-Spektrum des erhaltenen Produktes. Die Auswertung erfolgte als Darstellung der Absorbtion in Abhängigkeit von der Wellenzahl in cm$^{-1}$. Es wurde nur die Wellenzahl von 2.400 bis 3.600 erfaßt und im Rahmen der vorliegenden Analyse der Rohstoff Wollastonit aus dem FTIR-Spektrum mathematisch substrahiert. Als Folge davon zeigt Figur 2 lediglich die Schwingungsbanden der Oberflächenbeschichtung, nämlich des Polyorganosiloxanes auf der Oberfläche von Wollastonit insbesondere im Bereich von 2.800 - 3.100 Wellenzahlen. In diesem Wellenzahlenbereich sind insbesondere die CH-Schwingungen typisch. Die so erhaltene Abbildung ist daher ein charakteristischer Fingerabdruck für das Oberflächenadditiv und beschreibt die besondere Struktur des verwendeten Polyosiloxan-Polyether-Copolymer.

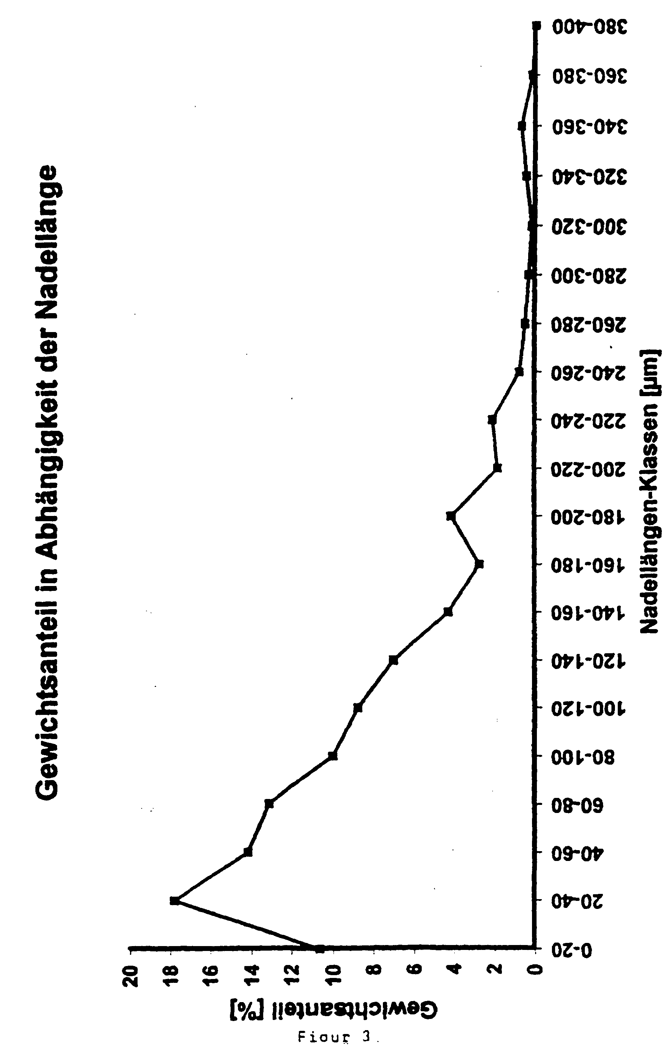

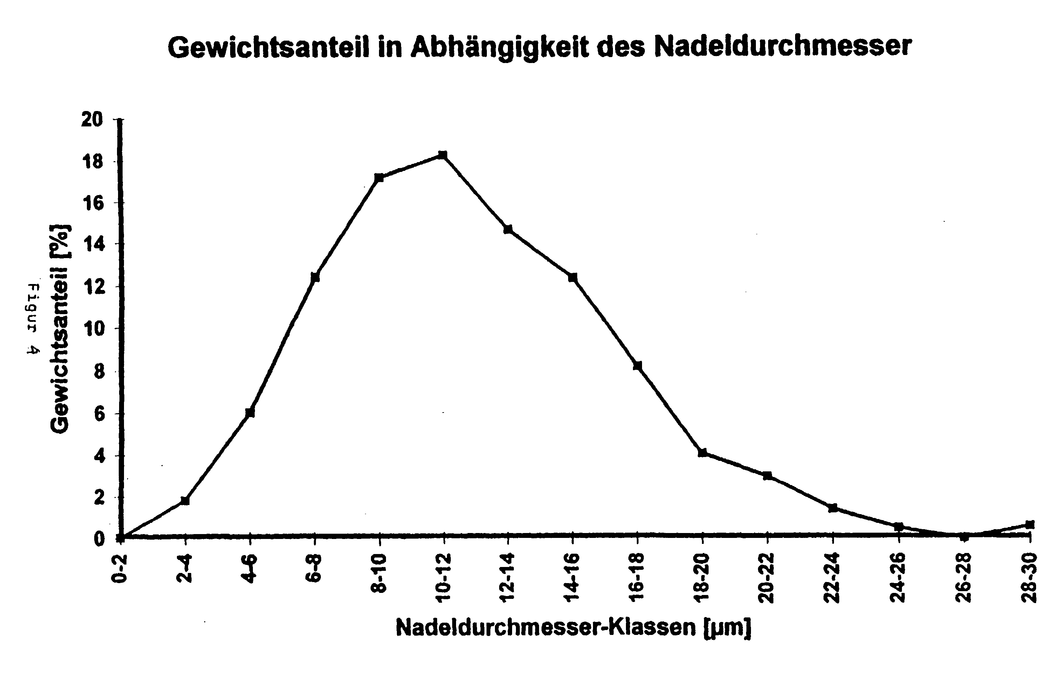

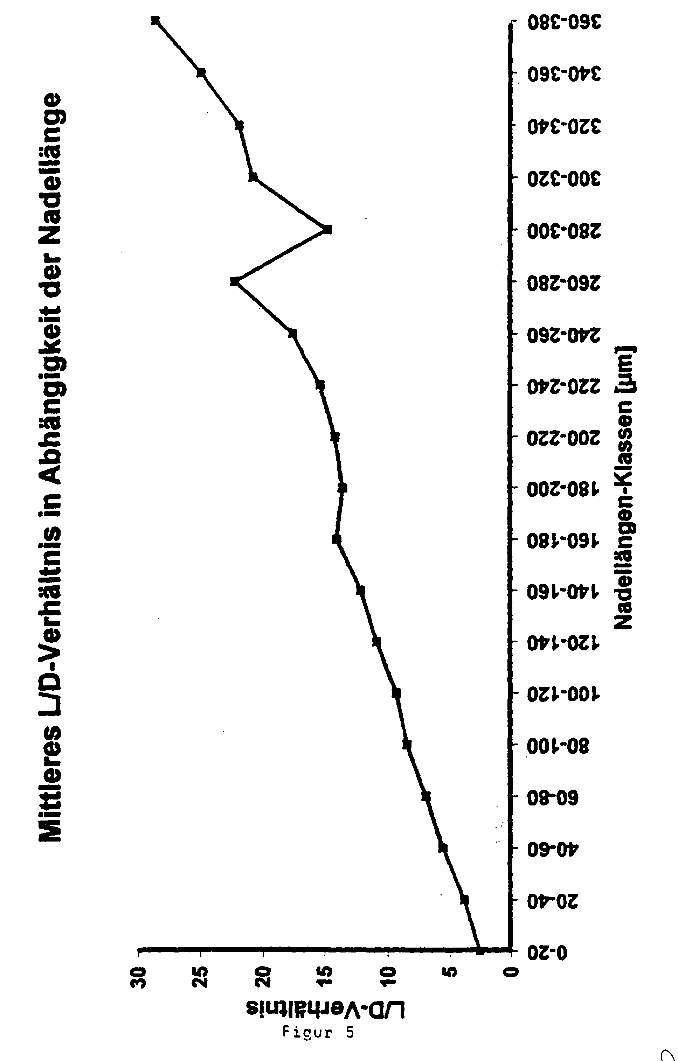

Die Figuren 3, 4 und 5 charakterisieren das erhaltene Produkt. bezüglich der Nadellänge (Figur 3), des Nadeldurchmessers (Figur 4) und des mittleren L/D-Verhältnisses (Länge-Durchmesser), in Abhängigkeit von der Nadellänge (Figur 5).

**Beispiel 2**

**Staubmessung**

In diesem Beispiel wurde das gemäß Beispiel 1 hergestellte erfindungsgemäße Produkt im Vergleich zu Produkten des Standes der Technik auf ihr Staubverhalten untersucht. Im einzelnen wurden folgende Produkte geprüft:

    a) Wollastonit gemäß Beispiel 1
    b) Wollastonit ohne Additiv (Stand der Technik)
    c) Wollastonit mit Aminosilan als Additiv (Stand der Technik)

Die Bestimmung des Staubverhaltens wurde mit folgender Methode vorgenommen :

    1. Staubmessung mit dem Dustmeter nach Heubach
    2. Bestimmung der spezifische Oberfläche DIN 66132 - BET

    1. Staubmessung mit dem Dustmeter nach Heubach Für die Untersuchung wird ein Heubach-Dustmeter, eine Analysenwaage sowie ein Filter GF 92 (S + S) eingesetzt. Das Meßgerät besteht aus Basisgerät mit Luftmessung (Volumen, Temperatur, Antriebsmotor, Vakuumdruckpumpe). Es enthält Ausleger mit

-    Haltern für Aufbauten
-    Staubentwicklungsgefäß
-    Grobabscheider
-    Luftfiltrationsgefäß

a) Montage

Das Saugrohr mit Schlaucholive wird fest auf den Gewindestutzen geschraubt, das Stabilisator-Rohr auf den Zapfen gesteckt, mit dem Klemmkloben fixiert und der Fuß an den Rohrenden befestigt. Die kurzen Stativstangen können an jeder Stelle des Auslegers fixiert werden. Mit Hilfe der Doppelmuffe und der Stativklemme wird der gewünschte Aufbau erstellt.

b) Funktion und Arbeitsweise

Die zu prüfende Substanz wird im rotierenden Staubentwicklunggefäß in Bewegung gehalten. Der Staub wird von einem axial eintretenden Luftstrom erfaßt und passiert einen Grobabschneider aus Glas, in dem grobe, nicht flugfähige Partikel sedimentieren. Der im Luftstrom verbleibende Staub wird auf einem Filter abgeschieden. Den zur Prüfung erforderlichen Luftdruck erzeugt eine Vakuum-Druck-Pumpe; druckseitig erfolgt die Luftmengenmessung.

c) Durchführung der Messung

Einstellung des gewünschten Luftdurchflusses :
Empfohlen wird ein Luftvolumen von 100 l bei einer Meßdauer von 5 min (20 l/min).
Eine Einheit des Zählwerkes entspricht 0,1 l, d. h. für z. B. 100 l Luft sind am Sollwertsteller des vierstelligen Zählwerkes "1000" vorzuwählen. Das mit Filterpapier belegte Lutffiltrationsgefäß wird mit der Pumpe verbunden, das Nadelventil am Flowmeter ganz geöffnet, Netzschalter betätigt, Wahlschalter ausgerastet (Automatikbetrieb), am Sollwertsteller 20 l ("0200") vorgewählt. Nach Drücken der Taste "Start" setzt sich die Pumpe in Betrieb und schaltet nach 20 l selbsttätig ab. Das Nadelventil an der Pumpe wird soweit geschlossen bzw. geöffnet, bis die vorgewählten 20 l in genau 1 min. gefördert werden. Sämtliche weiteren Messungen erfolgen jetzt mit einem Durchfluß von 20 l Luft/min.

d) Staubmessung

Das abgewogene Prüfgut wird in das Staubentwicklungsgefäß eingebracht; je nach Schüttdichte 25 g, 50 g oder 100 g. Bis zu einer Schüttdichte von 0,5 g/ml sollte die Einwaage 25 g bzw. 50 g betragen, darüber 100 g.
Vor Beginn der Messung wird das mit Filterpapier belegte Luftfiltrationsgefäß ausgewogen ($m_1$). Am vierstelligen digitalen Sollwertsteller ist die gewünschte Luftmenge vorgewählt. Wenn alle Verbindungen vom Staubentwicklungsgefäß bis zur Pumpe hergestellt sind, drückt man die Taste "Start" und setzt sowohl den Getriebemotor als auch die Pumpe in Betrieb. Ist die vorgewählte Luftmenge erreicht, wird beides automatisch gestoppt. Erneutes Auswiegen des Filtrationsgefäßes ergibt $m_2$. Der am Filter verbleibende Gummistopfen sollte vor der Wägung außen mit Putzpapier gereinigt werden.

e) Standard-Meßbedingungen für QW-Produkte

Die das Meßgerät durchströmende Luft wird immer durch einen vorgeschalteten Trockenturm gefahren, um den Einfluß der Luftfeuchtigkeit auf die Staubentwicklung auszuschalten.

| Luftvolumen | 20 l/min. |
|---|---|
| Meßdauer | 5 min. |
| Einwaage | 50 g |
| Filter | GF 92, Schleicher & Schüll |

f) Auswertung

Die Staubungszahl "s" entspricht der von 100 g Prüfgut bei den normierten Bedingungen entwickelten Staubmenge in mg.
Sie wird nach folgender Gleichung berechnet:

$$s = \frac{m_2 - m_1}{m_0} \times 10^5$$

Hierin bedeuten :

$m_0$ Einwaage in g der Probe
$m_1$ Masse des Filtergehäuses mit eingelegtem Filter vor der Messung
$m_2$ Masse des Filtergehäuses mit eingelegtem Filter nach der Messung

Die Staubungszahl "s" aller drei Proben wurde ermittelt. Die Tabelle 1 zeigt die Staubungszahl in mg/100 g.

Tabelle 1:

| Material | Staubungszahl [mg/100 g] |
|---|---|
| Wollastonit nach Beispiel 1 | 700 |
| Wollastonit ohne Additiv | 1.200 |
| Wollastonit mit Aminosilan | 1.500 |

Aus Tabelle 1 ist zu ersehen, daß der Wollastonit gemäß Beispiel 1 eine um mehr als 50 % niedrigere Staubzahl aufweist als der Wollastonit gemäß dem Stand der Technik, der mit Aminosilan beschichtet ist.

2. Bestimmung der spezifischen Oberfläche nach DIN 66132 - BET

In dem nachfolgenden Versuch wurde die spezifische Oberfläche des Wollastonit gemäß Beispiel 1 sowie der Vergleichsprodukte aus dem Stand der Technik ermittelt. Die spezifische Oberfläche ist bei Materialien besonders hoch, die einen hohen Staubanteil enthalten, da der Staub eine große spezifische Oberfläche besitzt. Für die zwei Produkte konnten folgende Daten ermittelt werden, die in Tabelle 2 dargestellt sind.

Tabelle 2:

| Material | spez. Oberfläche [$m^2$/g] |
|---|---|
| Wollastonit nach Beispiel 1 | 0,8 |
| Wollastonit mit Aminosilan | 1,2 |

Aus der Tabelle 2 ist zu ersehen, daß die spezifische Oberfläche des erfindungsgemäßen Produktes geringer ist als die spezifische Oberfläche des Wollastonits mit Aminosilan.

**Beispiel 3**

**Herstellung eines Formteiles aus Kunststoff (Polyurethan) mit verstärkendem Füllstoff Wollastonit**

Mit dem Wollastonit-Produkt aus Beispiel 1 sowie mit einem Vergleichsprodukt, nämlich Wollastonit mit Aminosilan beschichtet, wurde ein Kunststofformteil folgender Zusammensetzung hergestellt :

Polyol

| Polyether | 64,4 Gew.TI Glycerin / 85 PO /15 EO, OHZ = 35 |
|---|---|
| Diethyltoluylendiamin | 35 Gew.TI |
| Diazabicyclooctan | 0,5 Gew.TI |
| Dibutylzinndilaurat | 0,1 Gew.TI |

Semiprepolymer

| Polyether | Glycerin / 85 PO /15 EO , OHZ = 35 |
|---|---|
| Diphenylmethan | - 4,4'- diisocyanat |
| NCO-Gehalt | 18 % |

Das Mischungsverhältnis betrug 100 Gew. TI Polyol und 107 Gew.TI Semiprepolymer sowie 20 Gew.TI Wollastonit im Elastomer. Aus dem so hergestellten Kunststoff wurde ein Kunststofformteil spritzgegegossen und auf seine mechanischen Eigenschaften hin untersucht. Es wurden die nachfolgenden in Tabelle 3 angegebenen Ergebnisse erzielt :

Tabelle 3:

| | Wollastonit mit Aminosilan | Wollastonit nach Beispiel 1 |
|---|---|---|
| Shore D Härte nach DIN 53505 | 63 | 64 |
| Zugfestigkeit nach DIN 53455 | 25 | 25 |
| Bruchdehnung in % nach DIN 53455 | 100 | 130 |
| Biege-E-Modul (Mpa) nach DIN 53457 | 1.600 | 1.800 |
| Schwindung in % nach DIN 53464 | 0,5 | 0,4 |

Aus der Tabelle ist zu ersehen, daß die mechanischen Eigenschaften des Kunststoffes, in dem das Wollastonit gemäß Beispiel 1 eingesetzt wird, gegenüber den mechanischen Eigenschaften herkömmlicher verstärkter Kunststoffe, überlegen sind.

**Beispiel 4**

**Herstellung eines Formteils aus Kunststoff (Polypropylen) mit verstärkendem Füllstoff Wollastonit**

Es wird ein Polypropylen Copolymer hergestellt mit einem Anteil von 20 Gew.-% Wollastonit gemäß Beispiel 1 sowie mit einem Vergleichsprodukt, nämlich Wollastonit mit Alkylsilan beschichtet. Aus diesem Material wird ein Kunststofformteil hergestellt und seine mechanischen Eigenschaften ermittelt. Es wurden die nachfolgenden in Tabelle 5 angegebenen Ergebnisse erzielt:

Tabelle 5:

| | Wollastonit mit Alkylsilan | Wollastonit nach Beispiel 1 |
|---|---|---|
| Zugfestigkeit (MPa) DIN 53455 | 18,4 | 19,1 |
| Reißdehnung (%) DIN 53455 | 30,4 | 17,9 |
| E-Modul (Gpa) DIN 53457 | 2,266 | 2,233 |
| Schlagzähigkeit (Izod) (kJ/m$^2$) ohne Kerbe, Iso 180 mit Kerbe, Iso 180 | 50,4 19,0 | 89,0 23,5 |
| Formbeständigkeit in der Wärme HDT-B (°C) DIN 53461 | 123 | 115 |

Aus der Tabelle ist zu ersehen, daß die mechanischen Eigenschaften des Kunststoffes, in dem Wollastonit gemäß Beispiel 1 eingesetzt wird, gegenüber herkömmlich verstärktem Polypropylen verbessert sind.

**Patentansprüche**

1.    Verfahren zur Reduzierung des Staubverhaltens von Silikate, wobei das zerkleinerte Silikat mit einem Polysiloxan-Polyether-Copolymer oberflächenbeschichtet wird.

2.    Verfahren nach Anspruch 1, **dadurch gekennzeichnet, daß** für die Beschichtung 0,1 bis 4 Gew.-% Polysiloxan-Polyether-Copolymer eingesetzt werden.

3.    Verfahren nach Anspruch 1 oder 2, **dadurch gekennzeichnet, daß** für die Beschichtung 0,5 bis 1,5 Gew.-% Polysiloxan-Polyether-Copolymer eingesetzt werden.

4.    Verfahren nach den Ansprüchen 1 bis 3, **dadurch gekennzeichnet, daß** als Silikat Calciummetasilikat eingesetzt wird.

5.    Verfahren nach den Ansprüchen 1 bis 4, **dadurch gekennzeichnet, daß** als Silikat Wollastonit eingesetzt wird.

6. Silikat mit reduziertem Staubverhalten, **dadurch gekennzeichnet, daß** es mit Polysiloxan-Polyether-Copolymer oberflächen beschichtet ist und die folgenden Eigenschaften aufweist:

   - spezifische Oberfläche (D1N66132-BET)      0,5 bis 1,5 m$^2$/g
   - Staubanteil (nach Heubach)       500 bis 1200 mg/100g

7. Silikat nach Anspruch 6, **dadurch gekennzeichnet, daß** es ein Calciummetasilikat ist.

8. Silikat nach Anspruch 6 oder 7, **dadurch gekennzeichnet, daß** es Wollastonit ist.

9. Silikat nach den Ansprüchen 6 bis 8, **dadurch gekennzeichnet, daß** es mit 0,1 bis 4 Gew.-% Polysiloxan-Polyether-Copolymer oberflächen beschichtet ist.

10. Silikat nach den Ansprüchen 6 bis 9, **dadurch gekennzeichnet, daß** es mit 0,5 bis 1,5 Gew.-% Polysiloxan-Polyether-Copolymer oberflächenbeschichtet ist.

11. Verwendung des Silikates nach den Ansprüchen 6 bis 10 als verstärkender Füllstoff in Kunststoffen.

12. Verwendung nach Anspruch 11 als verstärkender Füllstoff in Kunststoffen ausgewählt aus der Gruppe Polyurethan, Polyamid und Polypropylen.


**Claims**

1. A method of reducing the dust behavior of silicates, in which method the comminuted silicate is surface-coated with a polysiloxane-polyether copolymer.

2. The method according to claim 1, **characterized in that** from 0.1 to 4 wt.-% of polysiloxane-polyether copolymer is used in coating.

3. The method according to claim 1 or 2, **characterized in that** from 0.5 to 1.5 wt.-% of polysiloxane-polyether copolymer is used in coating.

4. The method according to claims 1 to 3, **characterized in that** calcium metasilicate is used as silicate.

5. The method according to claims 1 to 4, **characterized in that** wollastonite is used as silicate.

6. A silicate having reduced dust behavior, **characterized in that** said silicate has been surface-coated with polysiloxane-polyether copolymer and exhibits the following properties:

   - Specific surface area (DIN66132-BET)      0.5 to 1.5 m$^2$/g,
   - Dust content (according to Heubach)      500-1200 mg/100g.

7. The silicate according to claim 6, **characterized in that** said silicate is a calcium metasilicate.

8. The silicate according to claim 6 or 7, **characterized in that** said silicate is wollastonite.

9. The silicate according to claims 6 to 8, **characterized in that** said silicate has been surface-coated with 0.1 to 4 wt.-% of polysiloxane-polyether copolymer.

10. The silicate according to claims 6 to 9, **characterized in that** said silicate has been surface-coated with 0.5 to 1.5 wt.-% of polysiloxane-polyether copolymer.

11. Use of the silicate according to claims 6 to 10 as a reinforcing filler in plastic materials.

12. The use according to claim 11 as a reinforcing filler in plastic materials selected from the group of polyurethane, polyamide and polypropylene.

**Revendications**

1. Procédé pour réduire la propension des silicates à produire de la poussière, dans lequel le silicate divisé est revêtu en surface avec un copolymère de polysiloxane-polyéther.

2. Procédé selon la revendication 1, **caractérisé par le fait qu'**on utilise pour le revêtement 0,1 à 4 % en poids de copolymère de polysiloxane-polyéther.

3. Procédé selon la revendication 1 ou 2, **caractérisé par le fait qu'**on utilise pour le revêtement 0,5 à 1,5 % en poids de copolymère de polysiloxane-polyéther.

4. Procédé selon l'une des revendications 1 à 3, **caractérisé par le fait qu'**on utilise comme silicate du métasilicate de calcium.

5. Procédé selon l'une des revendications 1 à 4, **caractérisé par le fait qu'**on utilise comme silicate de la wollastonite.

6. Silicate ayant une tendance réduite à produire de la poussière, **caractérisé par le fait qu'**il est revêtu avec un copolymère de polysiloxane-polyéther et présente les propriétés suivantes:

   - surface spécifique (DIN 66132-BET)      0,5 à 1,5 $m^2$/g
   - proportion de poussière (selon Heubach)      500 à 1200 mg/100 g.

7. Silicate selon la revendication 6, **caractérisé par le fait qu'**il s'agit de métasilicate de calcium.

8. Silicate selon la revendication 6 ou 7, **caractérisé par le fait qu'**il s'agit de wollastonite.

9. Silicate selon les revendications 6 à 8, **caractérisé par le fait qu'**il est revêtu en surface avec 0,1 à 4 % en poids de copolymère de polysiloxane-polyéther.

10. Silicate selon les revendications 6 à 9, **caractérisé par le fait qu'**il est revêtu en surface avec 0,5 à 1,5 % en poids de copolymère de polysiloxane-polyéther.

11. Utilisation du silicate selon les revendications 8 à 10 comme charge de renforcement dans des matières plastiques.

12. Utilisation selon la revendication 11 comme charge de renforcement dans des matières plastiques choisies dans le groupe du polyuréthanne, du polyamide, et du polypropylène.

# Figur 1

**Figur 2**

Quarzwerke Frechen
*Subtraction Result:VP939-955; 100%; gepreßt 18.12.98

EP 1 165 683 B1

**Gewichtsanteil in Abhängigkeit der Nadellänge**

EP 1 165 683 B1

# Gewichtsanteil in Abhängigkeit des Nadeldurchmesser

Figur 4

EP 1 165 683 B1

# Mittleres L/D-Verhältnis in Abhängigkeit der Nadellänge

Figur 5

EP 1 165 683 B1

14